# EUROPÄISCHE PATENTSCHRIFT

(11) **EP 2 321 097 B1**
(45) Veröffentlichungstag und Bekanntmachung des Hinweises auf die Patenterteilung: **23.05.2012**
(21) Anmeldenummer: 09777280.0
(22) Anmeldetag: 17.07.2009
(51) Int. Cl.: B25J 9/00, B25J 9/04, B25J 9/10

(54) **GELENKARMROBOTER MIT U-FÖRMIGER BASIS**
JOINT ARM ROBOT WITH U SHAPED BASE
ROBOT À BRAS ARTICULÉ AVEC BASE EN FORME DE U

(30) Priorität: 18.07.2008 DE 102008033778
(43) Veröffentlichungstag der Anmeldung: 18.05.2011
(73) Patentinhaber: STAUBLI FAVERGES, 74210 Faverges (FR)
(72) Erfinder: SPORER, Norbert, 82549 Koenigsdorf (DE); HAEHNLE, Matthias, 80636 Muenchen (DE); GEIST, Christian, 82110 Germering (DE); WENLEDER, Sebastian, 82110 Germering (DE)
(74) Vertreter: Myon, Gérard Jean-Pierre
(86) Internationale Anmeldenummer: PCT/EP2009/005226
(87) Internationale Veröffentlichungsnummer: WO 2010/006812

(56) Entgegenhaltungen:
- US-A- 4 557 662
- US-A- 4 594 049
- US-A1- 2006 182 608
- US-B1- 6 326 755

## Beschreibung

Die Erfindung zweistufigen betrifft einen Gelenkarmroboter, der eine Basis, einen an der Basis um eine erste Drehachse schwenkbar angeordneten ersten Roboterarm und einen am ersten Roboterarm um eine zweite Drehachse schwenkbar angeordneten zweiten Roboterarm aufweist, wobei die erste Drehachse und die zweite Drehachse zumindest annähernd parallel zueinander sind, und der ferner einen konzentrisch zur ersten Drehachse angeordneten ersten Antriebsmotor zum zugmittelfreien Antrieb ersten Roboterarms und des zweiten Roboterarms um die erste Drehachse und einen zweiten Antriebsmotor mit einem zweistufigen Zugmittelgetriebe zur Bewegung des zweiten Roboterarms um die zweite Drehachse aufweist. Gelenkarmroboter dieser Art sind aus der US-A-4 557 662 bekannt.

Gelenkarmroboter wie vorstehend beschrieben gehören zu den SCARA-Robotern, die dienen ein am freien Ende des zweiten Roboterarms befestigtes Werkzeug in verschiedene Richtung zu bewegen, um damit bestimmte Aufgaben auszuführen. In der Regel kann das Werkzeug längs einer Hubachse verfahren und/oder um eine dritte Drehachse positioniert werden. Das Werkzeug kann beispielsweise eine Greifzange oder ein Saugkopf sein, so dass ein solchermaßen ausgerüsteter Gelenkarmroboter z.B. Leiterplatten mit elektronischen Bauelementen bestücken kann, Tabletten in Blisterverpackungen einlegen kann oder ähnliches. Bei diesen Aufgaben wird idealerweise eine sehr große Geschwindigkeit bei gleichzeitig hoher Positionierungspräzision gewünscht. Herkömmliche Gelenkarmroboter können diese Anforderungen nur bedingt erfüllen.

Sollen kleine und leichte Bauteile schnell hin und her bewegt werden, werden heutzutage häufig sogenannte Delta-Roboter eingesetzt, die drei oder vier ortsfest montierte Rotationsachsen aufweisen und bei denen eine Arbeitsplattform, an der ein Werkzeug angeordnet ist, mittels einer Parallelogrammführung räumlich geführt wird. Solche Delta-Roboter können aufgrund ihrer Konstruktion und ihres sich daraus ergebenden Platzbedarfs aber beispielsweise nicht dazu verwendet werden, von der Seite her in eine Presse oder eine ähnliche Vorrichtung einzugreifen, um von der Vorrichtung erzeugte oder bearbeitete Gegenstände zu erfassen und an einen anderen Ort zu bewegen.

Der aus der US-A-4 557 662 bekannte Roboter besitzt als Basis einen Sockel und eine fest damit verbundene U-förmige Struktur mit einem oberen und einem unteren Schenkel, zwischen denen der erste Roboterarm schwenkbar gelagert ist. Beide Antriebsmotoren sind auf der Basis bezüglich des ersten Roboterarms hintereinander angeordnet.

Der vorliegenden Erfindung liegt die Aufgabe zugrunde, einen Gelenkarmroboter bereitzustellen, der höhere Bewegungsgeschwind gkeiten als bekannte Gelenkarmroboter bei gleichzeitig hoher Positioniergenauigke und kompakter Bauform erlaubt.

Diese Aufgabe ist mit einem Gelenkarmroboter gelöst, der die Merkmale des Patentanspruchs 1 aufweist.

Die durch die U-förmige Struktur der Basis erreichte, gabelartige Lagerung des ersten Roboterarms führt in Verbindung mit dem durch den ersten Antriebsmotor bewirkten zugmittelfreien Antrieb der ersten Drehachse zu einer hohen strukturellen Steifigkeit der Lagerung des ersten Roboterarms und zu einer weitgehenden Spielfreiheit seines Antriebs um die erste Drehachse, wodurch der erste Roboterarm sehr schnell und dennoch präzise bewegbar ist. Der erste Antriebsmotor ist mit einem Getriebe gekoppelt, beispielsweise mit einem sogenannten Harmonic-Drive-Getriebe, einem Planetengetriebe oder einem Exzentergetriebe.

Durch die Hintereinanderanordnung der beiden Antriebsmotoren auf der Basis bezüglich des ersten Roboterarms wird zum einen die bewegte Masse des Gelenkarmroboters minimiert und zum anderen ein großer Arbeitsraum bzw. Arbeitswinkel ermöglicht, da der zweite Antriebsmotor im Totraumbereich des ersten Roboterarms angeordnet ist, d.h. in einem Bereich, der vom ersten Roboterarm ohnehin nicht überstrichen wird. Vorzugsweise werden als Antriebsmotoren zwei gleiche Motoren verwendet. Dies vereinfacht die Ersatzteilhaltung und verbilligt die Beschaffung der Motoren.

Der Antrieb des zweiten Roboterarms mittels des zweiten Antriebsmotors über ein Zugmittelgetriebe mit einer Untersetzung im Bereich von 1:1 1 bis 30:1 bewirkt zum einen ebenfalls eine Herabsetzung der bewegten Massen des Roboters, da der Antriebsmotor für die zweite Drehachse sich auf der nicht bewegten Basis befindet und das Zugmittelgetriebe selbst relativ leicht ist, und erlaubt zum anderen eine hohe Dynamik der Bewegung des zweiten Roboterarms verbunden mit einer trotz des Zugmittelgetriebes guten Regelbarkeit aufgrund der steifen Lagerung und des weitgehend spielfreien Antriebs der ersten Drehachse. Vorzugsweise beträgt die Untersetzung des Zugmittelgetriebes zwischen 4:1 und 18:1, besonders bevorzugt ist ein Untersetzungsbereich zwischen 6:1 und 12:1 und insbesondere hat sich eine Untersetzung des Zugmittelgetriebes von zumindest annähernd 8:1 als sehr vorteilhaft herausgestellt. Als Zugmittel kommen beispielsweise Ketten, Riemen, insbesondere Zahnriemen, aber auch Seile oder Bänder, insbesondere Stahlbänder, in Frage. Unterschiedliche Zugmittel können auch in Kombination verwendet werden. Besonders bevorzugt ist das Zugmittelgetriebe als zweistufiges Zahnriemengetriebe ausgeführt.

Der erste Antriebsmotor ist mit einem Getriebe gekoppelt und als Motor-Getriebeeinheit ausgestaltet, die konzentrisch zur ersten Drehachse angeordnet ist. Das Getriebe ist vorzugsweise ein Exzentergetriebe oder ein Planetengetriebe, kann aber auch ein Harmonic-Drive-Getriebe sein. Besonders bevorzugt ist die Verwendung eines sogenannten Cyclogetriebes, welches ein Exzentergetriebe mit einer speziellen Verzahnung darstellt. Ein solches Cyclogetriebe hat ein eingangsseitig geringes Trägheitsmoment, was der Dynamik des Antriebs der ersten Drehachse zugute kommt.

Unabhängig von der genauen Art des mit dem ersten Antriebsmotor gekoppelten Getriebes hat letzteres vorzugsweise eine Untersetzung im Bereich von 20:1 bis 80:1, besonders bevorzugt ist ein Untersetzungsbereich von 30:1 bis 60:1, wobei sich eine Untersetzung von zumindest annähernd 40:1 als sehr vorteilhaft herausgestellt hat. In Verbindung mit den für das Zugmittelgetriebe genannten Untersetzungsbereichen lassen sich so relativ kleine, schnelldrehende Antriebsmotoren verwenden, die zur hohen Dynamik und guten Positioniergenauigkeit des erfindungsgemäßen Gelenkarmroboters beitragen. In diesem Zusammenhang geeignete Antriebsmotoren haben ein Nenndrehmoment im Bereich von 2,5 bis 10 Nm, vorzugsweise etwa 5 Nm, und weisen ein Trägheitsmoment von etwa 2 bis 3 * 10⁻⁴ kgm² auf.

Die Motor-Getriebeeinheit ist außen am oberen Schenkel der U-förmigen Struktur angeflanscht und das Getriebe erstreckt sich bauraumsparend in die U-förmige Struktur hinein. Dabei fungiert das Getriebe zugleich als oberes Festlager des ersten Roboterarms. Dies spart zusätzlich Bauraum und erhöht die Steifigkeit des Antriebs der ersten Drehachse.

Besonders bevorzugt ist nicht nur das obere Lager des ersten Roboterarms als Festlager ausgebildet, sondern auch das untere Lager des ersten Roboterarms, wobei es sich bei dem unteren Lager um ein axial vorgespanntes Festlager handelt. Man erzielt auf diese Weise eine nahezu völlige Spielfreiheit in sowohl axialer als auch radialer Richtung. Gemäß einer bevorzugten Ausgestaltung ist das untere Festlager axial vom oberen Festlager weg vorgespannt, insbesondere durch eine axiale Kraftbeaufschlagung des Lagerinnenrings. Hieraus ergibt sich eine Entlastung des oberen Lagers des ersten Roboterarms. Die Ausführung des unteren Lagers des ersten Roboterarms als Festlager bietet die Möglichkeit, bei bevorzugten Ausführungsformen das untere Festlager mit einer radialen Ausgleichsmöglichkeit während der Montage des ersten Roboterarms zu versehen. Insbesondere kann der Lagerträger des unteren Lagers sich bei der Montage des ersten Roboterarms radial etwas bewegen, so dass der Lagerträger und damit das untere Lager insgesamt sich mit dem oberen Lager, welches gleichzeitig das Getriebelager sein kann, ausrichten kann. Im Ergebnis erhält man dadurch im montierten Zustand eine sehr hohe Lagersteifigkeit und -spielfreiheit, was zur erwünschten hohen Positioniergenauigkeit beiträgt.

Ferner verläuft das Zugmittelgetriebe durch den unteren Schenkel der U-förmigen Struktur. Dies spart zum einen Bauraum und ermöglich es zum anderen, die Lagerung für die erste Stufe eines zweistufigen Zugmittelgetriebes im unteren Schenkel des ersten Roboterarms anzuordnen.

Weil die Lagerung der ersten Drehachse des erfindungsgemäßen Gelenkarmroboters sehr steif und spielfrei ist, kann die Regelung des ersten Antriebsmotors und des zweiten Antriebsmotors in einfacher Weise basierend auf der jeweiligen Motorposition erfolgen. Die durch das Zugmittelgetriebe bedingte Nachgiebigkeit im Antrieb der zweiten Drehachse lässt sich regelungstechnisch gut modellieren und wirkt sich daher nicht störend aus. Im Falle einer Kollision des zweiten Roboterarms oder des an ihm befestigten Werkzeugs mit einem harten Gegenstand mildert die Nachgiebigkeit im Antrieb der zweiten Drehachse unerwünschte Belastungen ab und vermindert so die Gefahr einer Beschädigung des Roboters, des Werkzeugs und/oder des Werkstücks. Wird eine noch höhere Positionierungsgenauigkeit verlangt, kann zusätzlich ein Positionsgeber, z.B. ein Encoder, an der zweiten Drehachse vorhanden sein.

Vorzugsweise sind der erste Antriebsmotor und der zweite Antriebsmotor so auf der Basis angeordnet, dass sie zur gleichen Seite der Basis hervorstehen. Das Hervorstehen beider Antriebsmotoren zur selben Seite der Basis hat einen kompakten, relativ flachen Aufbau des Gelenkarmroboters und damit einen verringerten Platzbedarf zur Folge.

Zusammenfassend stellt die vorliegende Erfindung einen sehr schnellen Gelenkarmroboter mit hoher Dynamik und Positioniergenauigkeit bereit, der aufgrund seiner kompakten Bauweise äußerst vielfältig in den unterschiedlichsten industriellen Herstellungsprozessen einsetzbar ist. Ein Ausführungsbeispiel eines erfindungsgemäßen Gelenkarmroboters wird im Folgenden anhand der beigefügten, schematischen Figuren näher erläutert. Es zeigt:
- Figur 1: eine räumliche Ansicht eines Ausführungsbeispiels des erfindungsgemäßen Gelenkarmroboters,
- Figur 2: den mittleren Abschnitt des Gelenkarmroboters aus Figur 1 in vergrößerter, geschnittener Darstellung, und
- Figur 3: den unteren Bereich der drehbaren Lagerung des ersten Roboterarms in nochmals vergrößerter, geschnittener Darstellung.

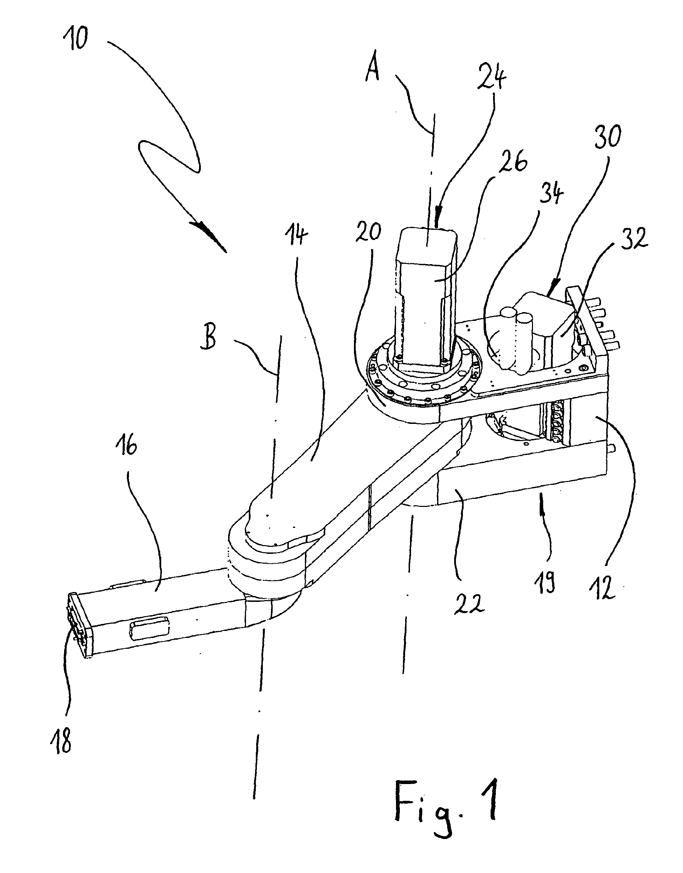

In Figur 1 ist eine perspektivische Ansicht eines allgemein mit 10 bezeichneten Gelenkarmroboters dargestellt, der eine Basis 12, einen an der Basis um eine erste Drehachse A schwenkbar angeordneten ersten Roboterarm 14 sowie einen am ersten Roboterarm 14 um eine zweite Drehachse B schwenkbar angeordneten zweiten Roboterarm 16 aufweist. Am vorderen, freien Ende des zweiten Roboterarms 16 ist eine Schnittstelle 18 zur modularen Anbringung eines hier nicht dargestellten Werkzeugs vorhanden, das beispielsweise ein Greifer oder ein Saugkopf sein kann und das um eine dritte Drehachse verschwenkt und/oder längs einer Hubachse verfahren werden kann.

Die erste Drehachse A und die zweite Drehachse B verlaufen im gezeigten Ausführungsbeispiel parallel zueinander. Aufgrund der Analogie zum menschlichen Arm wird der erste Roboterarm 14 auch als Oberarm und der zweite Roboterarm 16 als Unterarm bezeichnet.

Die Basis 12, mit der der Gelenkarmroboter 10 beispielsweise an einer Wand oder an einem Traggestell (nicht dargestellt) befestigt werden kann, hat eine insgesamt U-förmige Struktur 19 mit einem oberen Schenkel 20 und einem unteren Schenkel 22, zwischen denen das eine Ende des ersten Roboterarms 14 zur Drehung um die Achse A aufgenommen ist. Am entgegengesetzten, anderen Ende des Roboterarms 14 ist der zweite Roboterarm 16 zur Drehung um die Achse B angebracht.

Zur Bewegung der beiden Roboterarme 14, 16 um die erste Drehachse A dient ein erster Antriebsmotor 24, der vorzugsweise ein Servomotor ist und der auf der Oberseite des oberen Schenkels 20 der Basis 12 konzentrisch zur ersten Drehachse A so befestigt ist, dass sein Gehäuse 26 längs der Achse A nach oben von der Basis 12 wegragt.

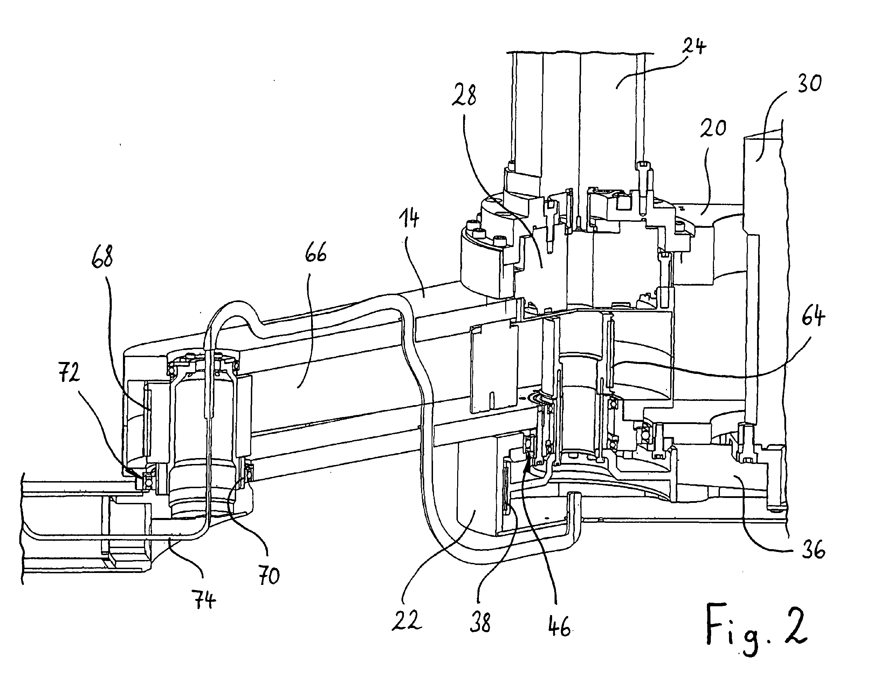

Wie besser aus Figur 2 zu ersehen, ist im dargestellten Ausführungsbeispiel der erste Antriebsmotor 24 mit einem Getriebe 28 zur Bildung einer Motor-Getriebeeinheit verblockt, die konzentrisch zur ersten Drehachse A angeordnet ist. Im gezeigten Ausführungsbeispiel ist das Getriebe 28 ein sogenanntes Cyclogetriebe, d.h. ein Exzentergetriebe mit einer speziellen Verzahnung. Cyclogetriebe zeichnen sich durch ein eingangsseitig geringes Trägheitsmoment und eine hohe Steifigkeit aus. Wie dargestellt, ist das Cyclogetriebe 28 in der Bauhöhe des oberen Schenkels 20 der Basis 12 und damit platzsparend untergebracht, wobei die nicht weiter gezeigte, als Festlager ausgebildete Drehlagerung des Getriebes 28 zugleich die obere Lagerung des ersten Roboterarms 14 bildet.

Das im Ausführungsbeispiel verwendete Cyclogetriebe hat ein Untersetzungsverhältnis von 40:1, bei anderen hier nicht dargestellten Ausführungsformen kann dieses Untersetzungsverhältnis im Bereich von 20:1 bis 80:1 liegen.

Zur Bewegung des zweiten Roboterarms 16 um die zweite Drehachse B dient ein zweiter Antriebsmotor 30, der vorzugsweise ebenfalls ein Servomotor ist und der bezüglich des ersten Roboterarms 14 hinter dem ersten Antriebsmotor 24 im unteren Schenkel 22 der Basis 12 so befestigt ist, dass sich sein Gehäuse 32 in derselben Richtung wie das Motorgehäuse 26, d.h. parallel zur ersten Drehachse A, nach oben erstreckt, wobei sein freies Ende durch eine Öffnung 34 im oberen Schenkel 20 herausragt. Anders ausgedrückt ist der zweite Antriebsmotor 30 in einem von den beiden Roboterarmen 14, 16 nicht überstrichenen Bereich hinter dem ersten Antriebsmotor 24 angeordnet, der deshalb auch als Totraumbereich bezeichnet wird. Diese Positionierung des zweiten Antriebsmotors 30 führt in Verbindung mit den zur selben Seite hervorragenden Motorgehäusen 26 und 32 zu einem kompakten Aufbau im Bereich der Basis 12 und schränkt zudem die Beweglichkeit der Roboterarme 14, 16 kaum ein. Im gezeigten Ausführungsbeispiel handelt es sich bei den beiden Antriebsmotoren 24, 30 um zwei gleiche Motoren mit einem Trägheitsmoment von 2,4*10⁻⁴ kgm² und einem Nennmoment von 5 Nm.

Der zweite Antriebsmotor 30 überträgt sein Antriebsmoment über ein hier als Zahnriemengetriebe ausgeführtes zweistufiges Zugmittelgetriebe auf den zweiten Roboterarm 16. Die erste Stufe dieses Zahnriemengetriebes besteht aus dem nicht dargestellten Antriebsritzel des zweiten Antriebsmotors 30, einem ersten Zahnriemen 36 und einer ersten Zahnscheibe 38, die konzentrisch zur ersten Drehachse A im unteren Schenkel 22 der Basis 12 untergebracht ist. Somit ist die gesamte erste Stufe des Zahnriemengetriebes im unteren Schenkel 22 der Basis 12 aufgenommen. Die erste Stufe des Zahnriemengetriebes hat im gezeigten Beispiel ein Untersetzungsverhältnis von knapp 5:1.

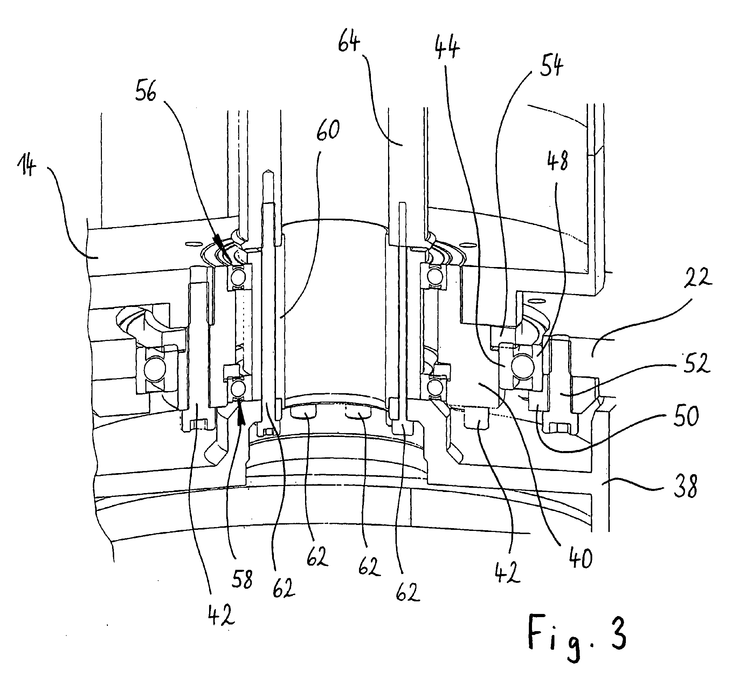

Unter Bezugnahme auf Figur 3 wird nun die untere Lagerung des ersten Roboterarms 14 und der ersten Zahnscheibe 38 näher erläutert. Ein Lagerträger 40, dessen Aufgabe später noch näher erläutert wird, ist mit mehreren Schrauben 42 am ersten Roboterarm 14 befestigt. Gegen diesen Lagerträger 40 stützt sich radial ein Innenring 44 eines Kugellagers 46 ab, zu dem ferner ein Außenring 48 gehört, der sich mit seiner Außenumfangsfläche radial an einem Spannring 50 abstützt, der mit Schrauben 52 am unteren Schenkel 22 der Basis 12 befestigt ist.

Ein den Lagerträger 40 umgebender und sich in Figur 3 oben am ersten Roboterarm 14 abstützender, federnder Wellring 54 drückt axial auf den Innenring 44 des Kugellagers 46, so dass das Kugellager 46 axial vom bereits erwähnten, durch das Getriebelager gebildeten oberen Festlager weg vorgespannt ist. Bei dem das zweite Lager für den ersten Roboterarm 14 bildenden Kugellager 46 handelt es sich demnach abweichend vom üblichen Vorgehen ebenfalls um ein Festlager.

Der Lagerträger 40 ist allgemein hohlzylindrisch ausgebildet und lagert an seinem Innenumfang mittels zweier Kugellager 56 und 58 eine Welle 60, an deren Unterseite mittels Schrauben 62 die erste Zahnscheibe 38 und an deren Oberseite mittels derselben Schrauben 62 ein Ritzel 64 befestigt ist, welches im ersten Roboterarm 14 konzentrisch zur Drehachse A aufgenommen ist.

Beim Zusammenbau des Gelenkarmroboters 10 werden die erste Zahnscheibe 38, die Welle 60 und das Ritzel 64 mittels der Schrauben 62 aneinander befestigt und zusammen mit den beiden Kugellagern 56 und 58, dem Lagerträger 40 und dem Kugellager 46 als vormontierte Baugruppe von unten in den unteren Schenkel 22 der Basis 12 und weiter in den ersten Roboterarm 14 eingesetzt. Diese vormontierte Einheit wird mittels des Spannrings 50 und der Schrauben 52 im unteren Schenkel 22 der Basis 12 befestigt. Die Schrauben 42 werden zunächst noch nicht angezogen, sondern es wird dem Lagerträger 40 Gelegenheit gegeben, sich radial bezüglich des ersten Roboterarms 14 und damit auch bezüglich des oberen Festlagers zu zentrieren. Erst dann werden die Schrauben 42 angezogen und man erhält so eine axial und radial nahezu spielfreie Lagerung des ersten Roboterarms 14, wobei die beschriebene axiale Vorspannung des unteren Festlagers außerdem zu einer Entlastung des oberen Festlagers führt.

Das Ritzel 64 ist Teil der zweiten Stufe des Zahnriemengetriebes und überträgt seine Drehung mittels eines zweiten Zahnriemens 66 auf eine zweite Zahnscheibe 68, welche sich ebenfalls im ersten Roboterarm 14, jedoch konzentrisch zur zweiten Drehachse B angeordnet befindet. Ein sich nach unten der zweiten Zahnscheibe 68 erstreckender Lagerungsfortsatz 70 ist unmittelbar am zweiten Roboterarm 16 befestigt und über ein Kugellager 72 im ersten Roboterarm 14 drehbar gelagert.

Die zweite Stufe des Zahnriemengetriebes hat ein Untersetzungsverhältnis von knapp 1:2, so dass sich für das gesamte Zahnriemengetriebe beim betrachteten Ausführungsbeispiel ein Untersetzungsverhältnis von etwa 8:1 ergibt. Die beiden Zahnriemen 36, 66 werden durch nicht weiter erläuterte, herkömmliche Einrichtungen gespannt gehalten.

Der dargestellte zugmittelfreie Antrieb der ersten Drehachse A mittels des ersten Antriebsmotors 24 und des mit letzterem gekoppelten Getriebes 28 bewirkt in Verbindung mit der durch die Basis 12 bereitgestellten, gabelartigen Lagerung des ersten Roboterarms 14 einen äußerst steifen und spielfreien Antrieb des ersten Roboterarms, der mit hoher Dynamik und Positioniergenauigkeit erfolgt. Die in dem Antrieb des zweiten Roboterarms 16 aufgrund des Zahnriemengetriebes enthaltene, inhärente Nachgiebigkeit wirkt sich deshalb regelungstechnisch nicht störend aus. Im gezeigten Ausführungsbeispiel sind die beiden Drehachsen A und B miteinander verkoppelt, d.h. wenn der erste Antriebsmotor 24 eine Drehung des ersten Roboterarms 14 bewirkt, wird als Folge dieser Drehbewegung auch der zweite Roboterarm 16 mehr oder weniger weit um die zweite Drehachse B verdreht. Diese Verkoppelung kann jedoch durch geeignete Programmierung der erforderlichen Bewegungen der Roboterarme 14 und 16 zum Ausführen einer gewünschten Tätigkeit sogar als Vorteil genutzt werden, da eine gewünschte Drehung des ersten Roboterarms 14 den zweiten Roboterarm 16 im Idealfall ebenfalls in Richtung auf eine gewünschte Position verschwenkt.

Elektrische Signale von einem Werkzeug, das an der am freien Ende des zweiten Roboterarms 16 vorhandenen Schnittstelle 18 angebracht ist, werden durch eine Leitung 74 im zweiten Roboterarm 16 und durch die im Zentrum hohle zweite Zahnscheibe 68 in den ersten Roboterarm 14 hinein und oben aus ihm herausgeführt. Die, nunmehr stärker ummantelte Leitung 74 wird dann oben auf dem ersten Roboterarm 14 weitergeführt und in der Nähe der Lagerung des ersten Roboterarms 14 nach unten durch selbigen hindurch unter den unteren Schenkel 22 der Basis 12 geführt. Dort wird die Leitung 74 konzentrisch zur Drehachse A in den unteren Schenkel 22, genauer in einen sich im Zentrum der ersten Zahnscheibe 38 befindenden Hohlraum geführt, um von dort an eine Steuerungseinheit (nicht dargestellt) angeschlossen werden zu können.

## Patentansprüche

1. Gelenkarmroboter (10) mit
- einer Basis (12), die eine U-förmige Struktur (19) mit einem oberen Schenkel (20) und einem unteren Schenkel (22) aufweist,
- einem zwischen dem oberen Schenkel (20) und dem unteren Schenkel (22) um eine erste Drehachse (A) schwenkbar angeordneten ersten Roboterarm (14) und einem am ersten Roboterarm (14) um eine zweite Drehachse (B) schwenkbar angeordneten zweiten Roboterarm (16), wobei die erste Drehachse (A) und die zweite Drehachse (B) zumindest annähernd parallel zueinander sind,
- einem ersten Antriebsmotor (24) zur Bewegung des ersten Roboterarms (14) und des zweiten Roboterarms (16) um die erste Drehachse (A), und
- einem zweiten Antriebsmotor (30) zur Bewegung des zweiten Roboterarms (16) um die zweite Drehachse (B), wobei der erste Antriebsmotor (24) und der zweite Antriebsmotor (30) auf der Basis (12) befestigt sind, der erste Antriebsmotor (24) einen zugmittelfreien Antrieb um die erste Drehachse (A) bewirkt und der zweite Antriebsmotor (30) über ein Zugmittelgetriebe auf den zweiten Roboterarm (16) wirkt,
wobei
- der erste Antriebsmotor (24) und der zweite Antriebsmotor (30) auf der Basis (12) bezüglich des ersten Roboterarms (14) hintereinander angeordnet sind,
- der erste Antriebsmotor (24) mit einem Getriebe (28) gekoppelt und als Motor-Getriebeeinheit ausgestaltet ist, wobei die Motor-Getriebeeinheit konzentrisch zur ersten Drehachse (A) angeordnet ist,
- die Motor-Getriebeeinheit außen am oberen Schenkel (20) der U-förmigen Struktur (19) angeflanscht ist, wobei das Getriebe (28) sich in die U-förmige Struktur (19) hinein erstreckt,
- das Getriebe (28) zugleich als oberes Festlagers des ersten Roboterarms (14) fungiert,
- das Zugmittelgetriebe eine Untersetzung im Bereich von 1:1 bis 30:1 hat,
- das Zugmittelgetriebe durch den unteren Schenkel (22) der U-förmigen Struktur (19) verläuft, und
- das Zugmittelgetriebe zweistufig ist und die Lagerung für die erste Stufe des Zugmittelgetriebes im ersten Roboterarms (14) angeordnet ist.

2. Gelenkarmroboter nach Anspruch 1,
**dadurch gekennzeichnet, dass** die Untersetzung des Zugmittelgetriebes zwischen 4:1 und 18:1, vorzugsweise zwischen 6:1 und 12:1 und insbesondere 8:1 beträgt.

3. Gelenkarmroboter nach Anspruch 1 oder 2,
**dadurch gekennzeichnet, dass** das Getriebe (28) ein Exzentergetriebe oder ein Planetengetriebe ist.

4. Gelenkarmroboter nach Anspruch 3,
**dadurch gekennzeichnet, dass** das Getriebe (28) ein Cyclogetriebe ist.

5. Gelenkarmroboter nach einem der Ansprüche 1 bis 4,
**dadurch gekennzeichnet, dass** das Getriebe (28) eine Untersetzung im Bereich von 20:1 bis 80:1, vorzugsweise im Bereich von 30:1 bis 60:1 und insbesondere von 40:1 aufweist.

6. Gelenkarmroboter nach einem des vorhergehenden Ansprüche,
**dadurch gekennzeichnet, dass** das untere Lager (46) des ersten Roboterarms (14) ein axial vorgespanntes Festlagers ist.

7. Gelenkarmroboter nach Anspruch 6,
**dadurch gekennzeichnet, dass** das untere Festlager (46) axial vom oberen Festlager weg vorgespannt ist.

8. Gelenkarmroboter nach Anspruch 6 oder 7,
**dadurch gekennzeichnet, dass** das untere Festlager (46) eine radiale Ausgleichsmöglichkeit während der Montage des ersten Roboterarms (14) aufweist.

9. Gelenkarmroboter nach einem der vorhergehenden Ansprüche,
**dadurch gekennzeichnet, dass** eine Regelung des ersten Antriebsmotors (24) und des zweiten Antriebsmotors (30) basierend auf der jeweiligen Motorposition erfolgt.

10. Gelenkarmroboter nach Anspruch 9,
**dadurch gekennzeichnet, dass** zusätzlich ein Positionsgeber an der zweiten Drehachse (B) vorhanden ist.

11. Gelenkarmroboter nach einem der vorhergehenden Ansprüche,
**dadurch gekennzeichnet, dass** der erste Antriebsmotor (24) und der zweite Antriebsmotor (30) zur gleichen Seite der Basis (12) hervorstehen.

## Claims

1. A jointed-arm robot (10) comprising:
- a base (12) with a U-shaped structure (19) having a top leg (20) and a bottom leg (22),
- a first robot arm (14) arranged between the top leg (20) and the bottom leg (24) so as to be pivotable about a first rotation axis (A) and a second robot arm (16) arranged on the first robot arm (14) so as to be pivotable about a second rotation axis (B), wherein the first rotation axis (A) and the second rotation axis (B) are at least approximately parallel to one another,
- a first drive motor (24) for moving the first robot arm (14) and the second robot arm (16) about the first rotation axis (A), and
- a second drive motor (30) for moving the second robot arm (16) about the second rotation axis (B), the first drive motor (24) and the second drive motor (30) being fastened to the base, the first drive motor (24) producing a drive free of a flexible drive element about the first rotation axis (A) and the second drive motor (30) acting on the second robot arm (16) via a flexible transmission,
wherein
- the first drive motor (24) and the second drive motor (30) are arranged on the base (12) one behind the other relative to the first robot arm (14),
- the first drive motor (24) is coupled to a transmission (28) and is configured as a motor-transmission unit, wherein the motor-transmission unit is arranged concentrically to the first rotation axis (A),
- the motor-transmission unit is flange-mounted on the outside on the top leg (20) of the U-shaped structure (19), wherein the transmission (28) extends into the U-shaped structure (19),
- the transmission (28) at the same time functions as a top fixed bearing of the first robot arm (14),
- the flexible transmission has a reduction ratio within the range of 1:1 to 30:1.
- the flexible transmission runs through the bottom leg (22) of the U-shaped structure (19), and
- the flexible transmission is two-stage and the mounting for the first stage of the flexible transmission is arranged in the bottom leg (22) of the first robot arm (14).

2. The jointed-arm robot as claimed in claim 1, **characterized in that** the reduction ratio of the flexible transmission is between 4:1 and 18:1, preferably between 6:1 and 12:1 and in particular 8:1.

3. The jointed-arm robot as claimed in one of claims 1 or 2, **characterized in that** the transmission (28) is an eccentric transmission or an epicyclic transmission.

4. The jointed-arm robot as claimed in claim 3, **characterized in that** the transmission (28) is a cyclo transmission.

5. The jointed-arm robot as claimed in one of claims 1 to 4, **characterized in that** the transmission (28) has a reduction ratio within the region of 20:1 to 80:1, preferably within the range of 30:1 to 60:1 and in particular 40:1.

6. The jointed-arm robot as claimed in one of preceeding claims, **characterized in that** the bottom bearing (46) of the first robot arm (14) is an axially prestressed fixed bearing.

7. The jointed-arm robot as claimed in claim 6, **characterized in that** the bottom fixed bearing (46) is prestressed axially away from the top fixed bearing.

8. The jointed-arm robot as claimed in one of claims 6 or 7, **characterized in that** the bottom fixed bearing (46) has a radial compensation means during the fitting of the first robot arm (14).

9. The jointed-arm robot as claimed in one of preceeding claims, **characterized in that** the first drive motor (24) and the second drive motor (30) are controlled on the basis of the respective motor position.

10. The jointed-arm robot as claimed in claim 9, **characterized in that** there is also a position transmitter on the second rotation axis (B).

11. The jointed-arm robot as claimed in one preceeding claim, **characterized in that** the first drive motor (24) and the second drive motor (30) project on the same side of the base (12).

## Revendications

1. Robot à bras articulé (10) comportant :
- une base (12) qui présente une structure en forme de U (19) avec un montant supérieur (20) et un montant inférieur (22),
- un premier bras de robot (14) disposé de manière à pouvoir pivoté autour d'un premier axe de rotation (A) entre le montant supérieur (20) et le montant inférieur (22) et un second bras de robot (16) agencé de manière à pouvoir pivoté autour d'un second axe de rotation (B) sur le premier bras de robot (14), le premier axe de rotation (A) et le second axe de rotation (B) étant au moins approximativement parallèles,
- un premier moteur d'entraînement (24) pour le déplacement du premier bras de robot (14) et du second bras de robot (16) autour du premier axe de rotation (A) et
- un second moteur d'entraînement (30) pour le déplacement du second bras de robot (16) autour du second axe de rotation (B), le premier moteur d'entraînement (24) et le second moteur d'entraînement (30) étant fixés sur la base (12), le premier moteur d'entraînement (24) produisant un entraînement sans mécanisme de traction autour du premier axe de rotation (A) et le second moteur d'entraînement (30) agissant sur le second bras de robot (16) par le biais d'un engrenage à mécanisme de traction, dans lequel
- le premier moteur d'entraînement (24) et le second moteur d'entraînement (30) sont disposés sur la base (12) l'un derrière l'autre relativement au premier bras de robot (14),
- le premier moteur d'entraînement (24) est couplé à un engrenage (28) et réalisé sous la forme d'une unité moteur-engrenage, l'unité moteur-engrenage étant agencée de manière concentrique par rapport au premier axe de rotation (A),
- l'unité moteur-engrenage est bridée à l'extérieur sur le montant supérieur (20) de la structure en forme de U (19), l'engrenage (28) s'étendant à l'intérieur de la structure en forme de U (19),
- l'engrenage (28) fait en même temps office de palier fixe supérieur du premier bras de robot (14),
- l'engrenage à mécanisme de traction comporte une démultiplication située dans une plage comprise entre 1:1 et 30:1,
- l'engrenage à mécanisme de traction s'étend à travers le montant inférieur (22) de la structure en forme de U (19) et
- l'engrenage à mécanisme de traction est à deux étages et le logement des paliers, pour la première phase de l'engrenage à mécanisme de traction, est disposé dans le premier bras de robot (14).

2. Robot à bras articulé selon la revendication 1, **caractérisé en ce que** la démultiplication de l'engrenage à mécanisme de traction est comprise entre 4:1 et 18:1, de préférence entre 6:1 et 12:1 et s'élève en particulier à 8:1.

3. Robot à bras articulé selon la revendication 1 ou 2, **caractérisé en ce que** l'engrenage (28) est un engrenage excentrique ou un engrenage planétaire.

4. Robot à bras articulé selon la revendication 3, **caractérisé en ce que** l'engrenage (28) est un engrenage cyclique.

5. Robot à bras articulé selon l'une quelconque des revendications 1 à 4, **caractérisé en ce que** l'engrenage (28) présente une démultiplication comprise entre 20:1 et 80:1, de préférence entre 30:1 et 60:1 et s'élèvant en particulier à 40:1.

6. Robot à bras articulé selon l'une quelconque des revendications précédentes, **caractérisé en ce que** le palier inférieur (46) du premier bras de robot (14) est un palier fixe à précontrainte axiale.

7. Robot à bras articulé selon la revendication 6, **caractérisé en ce que** le palier fixe inférieur (46) est précontraint dans le sens axial, en s'éloignant du palier fixe supérieur.

8. Robot à bras articulé selon la revendication 6 ou 7, **caractérisé en ce que** le palier fixe inférieur (46) présente une possibilité d'équilibrage radiale pendant le montage du premier bras de robot (14).

9. Robot à bras articulé selon l'une quelconque des revendications précédentes, **caractérisé en ce que** le réglage du premier moteur d'entraînement (24) et du second moteur d'entraînement (30) a lieu en fonction de la position relative du moteur.

10. Robot à bras articulé selon la revendication 9, **caractérisé en ce qu'**il y a en outre un capteur de position sur le second axe de rotation (B).

11. Robot à bras articulé selon l'une quelconque des revendications précédentes, **caractérisé en ce que** le premier moteur d'entraînement (24) et le second moteur d'entraînement (30) dépassent du même côté de la base (12).
